# EUROPEAN PATENT APPLICATION

(11) **EP 4 793 750 A1**
(43) Date of publication of application: **19.08.2026**
(21) Application number: 26158362.9
(22) Date of filing: 13.02.2026
(51) Int. Cl.: G06F 3/12, B41J 29/38

(54) **OPTIONAL DEVICE AND PRINTING SYSTEM**

(30) Priority: 18.02.2025 JP 2025024482; 18.02.2025 JP 2025024483
(71) Applicant: Canon Kabushiki Kaisha, Tokyo 146-8501 (JP)
(72) Inventor: MATSUSHIMA, Hiroki, Tokyo (JP); FUJITA, Shigeru, Tokyo (JP)
(74) Representative: WESER & Kollegen Patentanwälte PartmbB

(57) **Abstract**

An optional device connectable to a printing apparatus in multi-stage connection in one direction, comprising an auxiliary function unit configured to assist a function of the printing apparatus, and a control unit, the control unit includes an arithmetic processing unit which performs arithmetic processing for controlling the auxiliary function unit based on power received from the printing apparatus, in a case where the printing apparatus is connected to an upstream side, and a power transmission unit configured to transmit power received from the printing apparatus to another optional device connected to a downstream side, and in a case where another optional device is connected to the upstream side, the arithmetic processing unit does not perform the arithmetic processing.

## Description

### TECHNICAL FIELD

The present disclosure relates to an optional device and a printing system.

### BACKGROUND

### TECHNICAL FIELD

Some printing apparatuses such as an inkjet printer as representative allow a paper feed device to be attached to the main body of the printing apparatus (see Japanese Patent Laid-Open No. 2013-86898). Such an external device is called an optional device or the like.

According to Japanese Patent Laid-Open No. 2013-86898, optional devices can be connected to the main body of a printing apparatus in multi-stage connection, that is, a plurality of optional devices can be attached to a printing apparatus. In such a configuration, as one example of a method for performing driving control of respective optional devices, a control unit in the printing apparatus performs driving control of the respective optional devices. In this case, the processing load on the control unit in the printing apparatus may become excessive.

As another example, a control unit is provided in each optional device to individually perform driving control of the optional device. In this case, all the control units in the plurality of optional devices need to be set in the operating state, and this can cause an increase in power consumption and the like.

### SUMMARY

The present disclosure provides a technique advantageous in relatively easily implementing appropriate driving control of each of a plurality of optional devices connected in multi-stage connection.

The present disclosure in its first aspect provides an optional device, as specified in claims 1, 13 and 23. Optional features are specified in claim 2 to 11 and 14 to 21.

The present disclosure in its second aspect provides a printing system, as specified in claims 12 and 22.

Features of the present disclosure will become apparent from the following description of embodiments with reference to the attached drawings. The following description of embodiments is described by way of example.

### BRIEF DESCRIPTION OF THE DRAWINGS

Fig. 1 is a perspective view showing an example of the configuration of a printing system according to an embodiment;
Fig. 2 is a schematic sectional view showing an example of the internal structure of the printing system;
Fig. 3 is a block diagram showing an example of the system configuration of a printing apparatus;
Fig. 4 is a block diagram showing an example of the system configuration of an optional device;
Fig. 5 is a block diagram showing an example of a case where one stage of the optional device is connected;
Fig. 6 is a block diagram showing an example of a case where two stages of the optional devices are connected;
Fig. 7 is a block diagram showing an example of a case where three stages of the optional devices are connected;
Fig. 8 is a block diagram showing an example of a case where four stages of the optional devices are connected;
Fig. 9 is a block diagram showing another example of the case where three stages of the optional devices are connected;
Fig. 10 is a block diagram showing another example of the system configuration of the optional device; and
Fig. 11 is a block diagram showing still another example of the case where three stages of the optional devices are connected.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### <<First Embodiment>>

### <Overall Configuration>

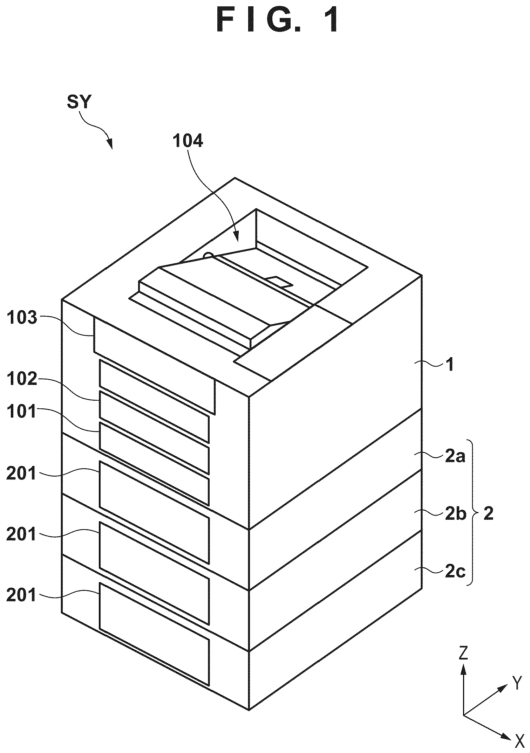

With reference to Fig. 1, an example of the configuration of a printing system SY according to an embodiment will be described. In this example, the printing system SY includes a printing apparatus 1 and optional devices 2a to 2c. For easy understanding, an X direction indicating the left-right direction, a Y direction indicating the front-back direction, and a Z direction indicating the up-down direction are shown in the drawings.

In this embodiment, the printing apparatus 1 is an inkjet printer. In the front face (the face on the -Y side) of the apparatus main body, an ink tank cover 101, a cassette 102, and a maintenance cover 103 can be provided so as to be freely attached and detached, freely inserted and removed, and freely opened and closed, respectively. The ink tank cover 101 allows housing and sealing of an ink tank (not shown) storing ink. The user can remove the ink tank cover 101 to refill ink into the ink tank or replace the ink tank itself. The cassette 102 can store a sheet SH serving as a print medium. The user can pull out the cassette 102 to replenish the sheet SH. The maintenance cover 103 seals the internal mechanism (for example, a part of a conveyance mechanism 11 to be described later) of the printing apparatus 1, and can be opened/closed to allow user access to the internal mechanism, for example, when a jam or the like occurs.

The printing apparatus 1 also includes a discharge unit 104 in the upper portion of the apparatus main body. The sheet SH having undergone printing by a printing operation performed in the apparatus is output from the apparatus main body and placed on the discharge unit 104.

The optional devices 2a to 2c are configured to be externally attachable to the printing apparatus 1 and connectable thereto in multi-stage connection in one direction (in the following description, these will simply be referred to as the optional devices 2 when they are not particularly distinguished). In this embodiment, the optional device 2 is connectable to the printing apparatus 1 from the lower side, and further allows multi-stage connection downward. The optional devices 2a to 2c have the same configuration. For example, in this embodiment, the devices 2a, 2b, and 2c are sequentially connected from above, but the order may be changed.

In this embodiment, the optional device 2 is a paper feed device (to be also expressed as an optional cassette device or the like) having a paper feed function different from that of the printing apparatus 1 itself. In this embodiment, a cassette 201 capable of storing the sheet SH is provided on the front face side of the optional device 2 so as to be freely inserted and detached. The user can pull out the cassette 102 to replenish the sheet SH.

Note that the size of the sheet SH which the cassette 201 can store and the size of the sheet SH which the cassette 102 can store may be the same or different. The size of the sheet SH which the cassette 201 can store may be the same or different among the optional devices 2a to 2c.

As another embodiment, the optional device 2 may be a device that additionally or alternatively has another auxiliary function different from the paper feed function.

As will be described later in detail, for example, for improvement in safety as one purpose, a predetermined number of stages (allowable number of stages) is set for the optional device 2 as the number of stages connectable to the printing apparatus 1. In this embodiment, up to three stages of the optional devices 2 can be connected to the printing apparatus 1.

### <Internal Structure>

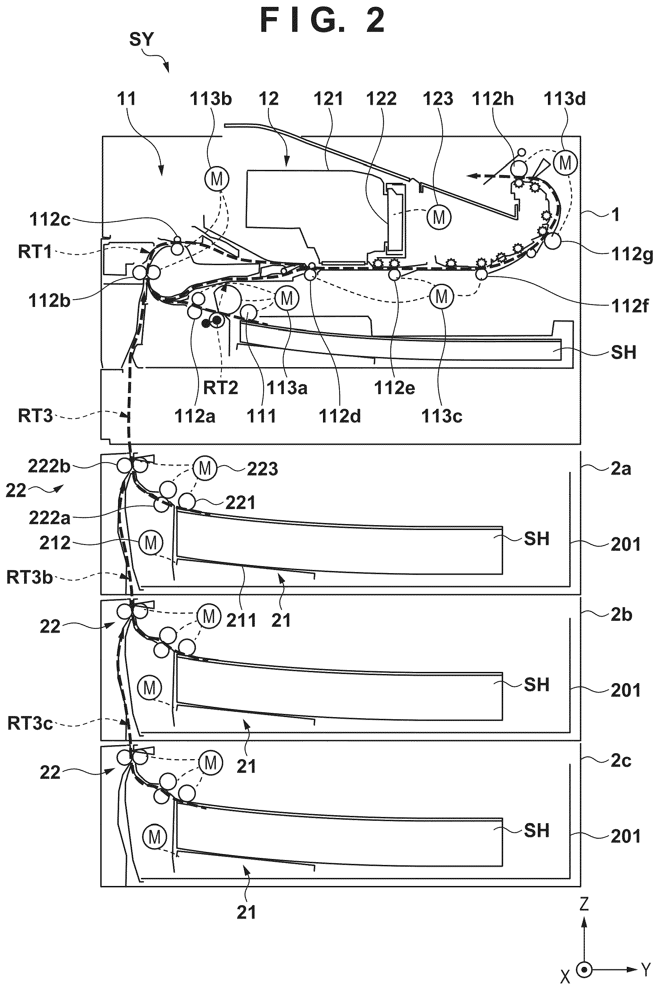

Fig. 2 is a schematic sectional view showing an example of the internal structure of the printing system SY. The printing apparatus 1 includes the conveyance mechanism 11 and a printing unit 12.

The conveyance mechanism 11 includes a pickup roller 111, conveyance roller pairs 112a, 112b, and 112c, conveyance rollers 112d, 112e, 112f, 112g, and 112h, and motors 113a, 113b, 113c, and 113d. The conveyance roller pairs 112a to 112c and the conveyance rollers 112d to 112h are arranged at corresponding positions in the apparatus main body to form a conveyance path RT1.

One or more sheets SH stored/stacked in the cassette 102 are picked up by the pickup roller 111, and conveyed by the conveyance roller pairs 112a to 112c toward the printing unit 12 to be described later. The pickup roller 111 and the conveyance roller pair 112a are driven by the motor 113a, and the conveyance roller pairs 112b and 112c are driven by the motor 113b.

Here, although a description thereof is omitted here, a separation mechanism is provided between the pickup roller 111 and the conveyance roller pair 112a. Thus, when two or more sheets SH are conveyed (when so-called multi-feed occurs), one sheet is conveyed, and the remaining sheet SH is returned to the cassette 102.

The sheet SH conveyed in this manner is further conveyed by the conveyance rollers 112d to 112h, and the sheet SH having undergone printing during the conveyance is output from the apparatus main body and placed on the discharge unit 104. The conveyance rollers 112d to 112f are driven by the motor 113c, and the conveyance rollers 112g and 112h are driven by the motor 113d.

The printing unit 12 includes a printhead 121, a carriage 122, and a motor 123. The printhead 121 can execute printing by, for example, individually discharging ink from a plurality of nozzles arrayed in the Y direction. The carriage 122 is configured to mount the printhead 121 and reciprocate in the X direction based on power from the motor 123, thereby enabling scanning of the printhead 121 in the X direction. In this embodiment, the printing unit 12 is arranged to face a platen between the conveyance rollers 112d and 112e in the conveyance path RT1, and executes printing while the sheet SH passes between the conveyance rollers 112d and 112e.

Such a printhead 121 is expressed as a serial head. As another embodiment, the printhead 121 may be a line head capable of executing printing at once over the entire region of the sheet SH in the widthwise direction.

The printing apparatus 1 can be configured to be capable of double-sided printing. In double-sided printing, the sheet SH passing through the printing unit 12 and having undergone printing on the obverse surface is made to pass through a conveyance path RT2 by reversely rotating the conveyance rollers 112d to 112h, and passes through the conveyance path RT1 again. Thus, the sheet SH is inverted. In this manner, the printing unit 12 can perform printing on the reverse surface. After printing on the reverse surface, the sheet SH is output from the apparatus main body and placed on the discharge unit 104 by the same procedure as described above.

The optional device 2a includes an elevating mechanism 21 and a conveyance mechanism 22. The elevating mechanism 21 includes an elevating base 211 and a motor 212. The elevating base 211 can be elevated based on power from the motor 212. When using the paper feed function of the optional device 2a, the elevating base 211 can lift the sheet SH in the cassette 201.

The conveyance mechanism 22 includes a pickup roller 221, conveyance roller pairs 222a and 222b, and a motor 223. The conveyance roller pairs 222a and 222b are arranged at corresponding positions in the device main body to form a conveyance path RT3. When using the paper feed function of the optional device 2a, one or more sheets SH stored/stacked in the cassette 201 abut against and picked up by the pickup roller 221 as the elevating base 211 rises, and conveyed by the conveyance roller pairs 222a and 222b. The pickup roller 221 and the conveyance roller pairs 222a and 222b are driven by the motor 223.

The sheet SH having passed through the conveyance path RT3 in this manner merges into the conveyance path RT1 in the printing apparatus 1. After undergoing printing in the printing apparatus 1 by the same procedure as described above, the sheet SH is output from the apparatus main body and placed on the discharge unit 104.

The operation in each of the optional devices 2b and 2c is implemented in a manner similar to that in the optional device 2a. For example, when using the paper feed function of the optional device 2b, the sheet SH in the optional device 2b is picked up from the cassette 201, passes through the conveyance path RT3 (to be denoted by RT3b for distinction), passes through the optional device 2a, merges into the conveyance path RT1 in the printing apparatus 1, and undergoes printing.

Similarly, for example, when using the paper feed function of the optional device 2c, the sheet SH in the optional device 2c is picked up from the cassette 201, passes through the conveyance path RT3 (to be denoted by RT3c for distinction), sequentially passes through the optional devices 2b and 2a, merges into the conveyance path RT1 in the printing apparatus 1, and undergoes printing.

Thus, in a configuration where the optional devices 2 are connected in two or more stages, when using the sheet feed function of one optional device 2 connected to the printing apparatus 1 via the other optional device 2, the other optional device 2 therebetween acts as an intermediary for conveying the sheet SH. Therefore, it is demanded to appropriately implement driving control of each of the printing apparatus 1 and the multiple optional devices 2.

Hereinafter, for the sake of descriptive convenience, the printing apparatus 1 side (the +Z side in this example) in the multi-stage connection of the optional devices 2 may be expressed as the upstream side, and the opposite side (the -Z side in this example) may be expressed as the downstream side.

### <System Configuration of Printing Apparatus>

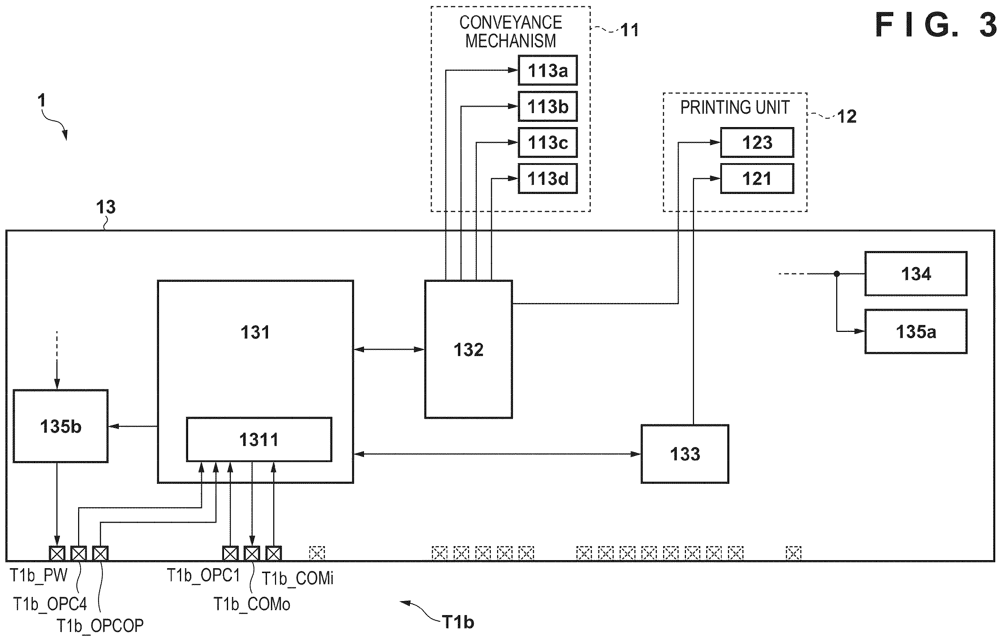

Fig. 3 is a block diagram showing an example of the system configuration of the printing apparatus 1. The printing apparatus 1 further includes a control unit 13 configured to perform driving control of the conveyance mechanism 11 and the printing unit 12. The control unit 13 includes a Central Processing Unit, CPU, 131, a motor driver 132, an image forming unit 133, a power supply unit 134, power ICs 135a and 135b, and a connection terminal portion T1b.

The power supply unit 134 can supply the externally received power to each of the power ICs 135a and 135b. The power IC 135a generates power necessary for driving control of each element in the printing apparatus 1, and supplies the generated power to the corresponding element. The power IC 135b generates power to be output and supplied to the optional device 2. As will be described later in detail, the power IC 135b is maintained in the inactive state when the optional device 2 is not connected, and activated when the optional device 2 is connected.

The CPU 131 can execute arithmetic processing for implementing driving control of the system of the entire printing apparatus 1. When the optional device 2 is connected to the printing apparatus 1, the CPU 131 executes communication with the optional device 2 to comprehensively control the entire printing system SY. For example, the CPU 131 reads out a program from a nonvolatile memory (for example, a Solid-State Drive, SSD) (not shown), and performs arithmetic processing while deploying intermediate data in a volatile memory (for example, a Dynamic Random Access Memory, DRAM) (not shown).

Based on the result of arithmetic processing received from the CPU 131, the motor driver 132 individually drives the motor 113a and the like. Based on the result of arithmetic processing received from the CPU 131, the image forming unit 133 generates and outputs print data corresponding to image data to the printhead 121. In this manner, printing based on print data is executed by the printhead 121 on the sheet SH conveyed by driving of the motor 113a and the like.

The CPU 131 also includes a detection unit 1311. As will be described later in detail, for example, when the optional device 2 is connected to the printing apparatus 1, the detection unit 1311 can detect the connection and communicate with the optional device 2. Note that the detection unit 1311 may be provided separately outside the CPU 131.

The connection terminal portion T1b includes terminals T1b_PW, T1b_OPC4, T1b_OPCOP, and T1b_OPC1.

The terminal T1b_PW is a power output terminal used to output and supply power from the power IC 135b of the printing apparatus 1 to the optional device 2.

The terminal T1b_OPC4 is an input terminal used to receive a signal indicating that the optional devices 2 are connected in four or more stages.

The terminal T1b_OPCOP is an input terminal used to receive a signal indicating that the cassette 201 is pulled out and set in the open state in any of one or more optional devices 2 connected to the printing apparatus 1.

The terminal T1b_OPC1 is an input terminal used to receive a signal indicating that at least one optional device 2 is connected to the printing apparatus 1.

The connection terminal portion T1b further includes terminals T1b_COMo and T1b_COMi.

The terminal T1b_COMo is an output terminal used to communicate with the optional device 2 connected to the printing apparatus 1.

The terminal T1b_COMi is an input terminal used to communicate with the optional device 2 connected to the printing apparatus 1.

In this embodiment, communication between the printing apparatus 1 and the optional device 2 is implemented by Universal Asynchronous Receiver Transmitter, UART, communication, but may be implemented by Serial Peripheral Interface, SPI, communication, Inter-Integrated Circuit, I2C, communication, or other known communication.

As will also be applied to other block diagrams to be described later, arrows on the power lines and signal lines in Fig. 3 indicate the direction of power supply and the direction of signal propagation, respectively. A bidirectional arrow on the signal line indicates that signal exchange is possible. A unidirectional arrow on the signal line indicates the main direction of signal propagation, and signal exchange may be possible as needed.

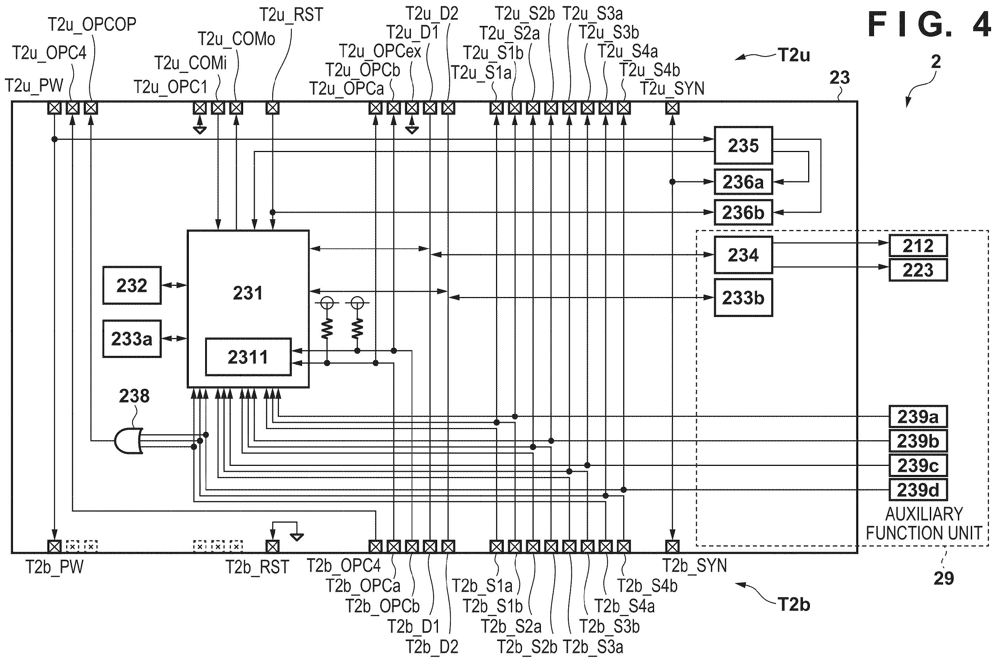

Note that, for easy understanding, terminals that are set in the unconnected state when an upstream-side connection terminal portion T2u (to be described later) (see Fig. 4) is connected are shown with dashed lines. These terminals need not be provided, but may be provided such that they are set in the open state in the apparatus main body.

### <System Configuration of Optional Device>

Fig. 4 is a block diagram showing an example of the system configuration of the optional device 2. The optional device 2 further includes a control unit 23 configured to perform driving control of the elevating mechanism 21 and the conveyance mechanism 22. The control unit 23 includes a CPU 231, a volatile memory 232, nonvolatile memories 233a and 233b, a motor driver 234, a voltage generation unit 235, reset ICs 236a and 236b, an upstream-side connection terminal portion T2u, and a downstream-side connection terminal portion T2b.

As will be described later in detail, when power is received from the power IC 135b of the printing apparatus 1, the voltage generation unit 235 can generate power necessary for driving control of each element in the optional device 2. The reset IC 236a can execute reset processing for synchronization when the optional device 2 is connected to the printing apparatus 1. The reset IC 236b can execute reset processing for initializing the CPU 231.

The CPU 231 can execute arithmetic processing for implementing driving control of the system of the entire optional device 2. When the optional device 2 is connected to the printing apparatus 1, the CPU 231 performs arithmetic processing while communicating with the CPU 131 of the printing apparatus 1. For example, the CPU 231 reads out a program from the nonvolatile memory 233a, and performs arithmetic processing while deploying intermediate data in the volatile memory 232.

The CPU 231 can also access the nonvolatile memory 233b to read out or update information, as needed. Note that the nonvolatile memory 233b stores information to be held in a changeable and nonvolatile manner, such as the connection position of the optional device 2. The nonvolatile memory 233b is arranged independently of the nonvolatile memory 233a which is arranged to implement the apparatus function itself as one purpose.

The CPU 231 also includes a detection unit 2311. As will be described later in detail, for example, if the number of stages of the optional devices 2 connected to the printing apparatus 1 exceeds the allowable number of stages (three stages in this example), the detection unit 2311 can detect this. Note that the detection unit 2311 may be provided separately outside the CPU 231.

The motor driver 234 drives the motor 223 based on the result of arithmetic processing received from the CPU 231. In this manner, when using the paper feed function of the optional device 2, the elevating base 211 is lifted to make the sheet SH in the cassette 201 abut against the pickup roller 221.

The upstream-side connection terminal portion T2u is configured to correspond to the connection terminal portion T1b in the lower portion of the printing apparatus 1. This enables connection of the optional device 2 to the printing apparatus 1 from below.

The upstream-side connection terminal portion T2u is also configured to correspond to the downstream-side connection terminal portion T2b. This enables connection of the optional device 2 to another optional device 2 from below.

### - Detailed Configuration of Upstream-side Connection Terminals

The upstream-side connection terminal portion T2u includes terminals T2u_PW, T2u_OPC4, T2u_OPCOP, and T2u_OPC1.

The terminal T2u_PW is a power input terminal to which power from the printing apparatus 1 can be input.

The terminal T2u_OPC4 is an output terminal used to notify (output a signal indicating) that the optional devices 2 are connected in four or more stages.

The terminal T2u_OPCOP is an output terminal used to notify that the cassette 201 is pulled out and set in the open state in any of one or more optional devices 2 connected to the printing apparatus 1.

The terminal T2u_OPC1 is an output terminal used to notify that the optional device 2 is connected to the printing apparatus 1. In this embodiment, a ground voltage (or low level (L level)) is output from the terminal T2u_OPC1.

The upstream-side connection terminal portion T2u further includes terminals T2u_COMi, T2u_COMo, and T2u_RST.

The terminal T2u_COMi is an input terminal used to communicate with the printing apparatus 1 connected to the optional device 2.

The terminal T2u_COMo is an output terminal used to communicate with the printing apparatus 1 connected to the optional device 2.

The terminal T2u_RST is an input terminal used to receive a signal indicating that another optional device 2 is connected to the upstream side.

The upstream-side connection terminal portion T2u further includes terminals T2u_OPCa, T2u_OPCb, and T2u_OPCex.

The terminal T2u_OPCa is one output terminal used to notify that another optional device 2 is connected to the upstream side.

The terminal T2u_OPCb is the other output terminal used to notify that another optional device 2 is connected to the upstream side.

The terminal T2u_OPCex is an output terminal used to notify the presence of the optional device 2 itself to another optional device 2 if the other optional device 2 is connected to the upstream side. In this embodiment, a ground voltage is output from the terminal T2u_OPCex.

The upstream-side connection terminal portion T2u further includes terminals T2u_D1 and T2u_D2.

The terminal T2u_D1 is an input/output terminal connected to a bus for signal exchange with the motor driver 234.

The terminal T2u_D2 is an input/output terminal connected to a bus for signal exchange with the nonvolatile memory 233b.

The upstream-side connection terminal portion T2u further includes terminals T2u_S1a, T2u_S1b, T2u_S2a, and T2u_S2b.

The terminal T2u_S1a is one output terminal used to output a signal related to a sensor 239a provided in the optional device 2.

The terminal T2u_S1b is the other output terminal used to output a signal related to the sensor 239a. The terminal T2u_S1b is connected to the sensor 239a in the optional device 2 via a signal line, and this signal line is connected to the CPU 231.

The terminal T2u_S2a is one output terminal used to output a signal related to a sensor 239b provided in the optional device 2.

The terminal T2u_S2b is the other output terminal used to output a signal related to the sensor 239b. The terminal T2u_S2b is connected to the sensor 239b in the optional device 2 via a signal line, and this signal line is connected to the CPU 231.

The upstream-side connection terminal portion T2u further includes terminals T2u_S3a, T2u_S3b, T2u_S4a, and T2u_S4b.

The terminal T2u_S3a is one output terminal used to output a signal related to a sensor 239c provided in the optional device 2.

The terminal T2u_S3b is the other output terminal used to output a signal related to the sensor 239c. The terminal T2u_S3b is connected to the sensor 239c in the optional device 2 via a signal line, and this signal line is connected to the CPU 231.

The terminal T2u_S4a is one output terminal used to output a signal related to a sensor 239d provided in the optional device 2.

The terminal T2u_S4b is the other output terminal used to output a signal related to the sensor 239d. The terminal T2u_S4b is connected to the sensor 239d in the optional device 2 via a signal line, and this signal line is connected to the CPU 231.

As an example, the sensor 239a is a sheet detection sensor that can detect the presence/absence of the sheet SH. The sensor 239b is an encoder sensor that can detect the conveyance amount of the sheet SH. The sensor 239c is a lift sensor that can detect the height of the elevating base 211. The sensor 239d is a cassette sensor that can detect the opening/closing of the cassette 201.

Here, four sensors 239a to 239d are exemplified, but the number and types of the sensors are not limited to those described in this example.

The upstream-side connection terminal portion T2u further includes a terminal T2u_SYN.

The terminal T2u_SYN is connected to a signal line that can transmit a reset signal for synchronization by the reset IC 236a.

### - Detailed Configuration of Downstream-Side Connection Terminals

The downstream-side connection terminal portion T2b includes terminals T2b_PW and T2b_RST.

The terminal T2b_PW is a power output terminal used to output and supply power from the printing apparatus 1 to another optional device 2 if the other optional device 2 is connected to the downstream side. The terminal T2b_PW is connected to the terminal T2u_PW via a power line in the control unit 23.

The terminal T2b_RST is an output terminal used to notify that another optional device 2 is connected to the downstream side. In this embodiment, a ground voltage is output from the terminal T2b_RST.

The downstream-side connection terminal portion T2b further includes terminals T2b_OPC4, T2b_OPCa, and T2b_OPCb

The terminal T2b_OPC4 is an input terminal used to receive a signal indicating that the optional devices 2 are connected in four or more stages. The terminal T2b_OPC4 is connected to the terminal T2u_OPC4 via a signal line in the control unit 23.

The terminal T2b_OPCa is one input terminal used to receive a signal indicating that another optional device 2 is connected to the downstream side. The terminal T2b_OPCa is connected to the terminal T2u_OPCa via a signal line in the control unit 23. This signal line is pulled up to high level (H level) via a predetermined pull-up resistor and connected to the detection unit 2311.

The terminal T2b_OPCb is the other input terminal used to receive a signal indicating that another optional device 2 is connected to the downstream side. The terminal T2b_OPCb is connected to the terminal T2u_OPCb via a signal line in the control unit 23. This signal line is pulled up to H level via a predetermined pull-up resistor and connected to the detection unit 2311.

The downstream-side connection terminal portion T2b further includes terminals T2b_D1 and T2b_D2.

The terminal T2b_D1 is an input/output terminal connected to a bus for signal exchange with the motor driver 234. The terminal T2b_D1 is connected to the terminal T2u_D1 via a bus in the control unit 23.

The terminal T2b_D2 is an input/output terminal connected to a bus for signal exchange with the nonvolatile memory 233b. The terminal T2b_D2 is connected to the terminal T2u_D2 via a bus in the control unit 23.

The downstream-side connection terminal portion T2b further includes terminals T2b_S1a, T2b_S1b, T2b_S2a, and T2b_S2b.

The terminal T2b_S1a is one input terminal used to receive a signal related to the sensor 239a. The terminal T2b_S1a is connected to the CPU 231 via a signal line in the control unit 23.

The terminal T2b_S1b is the other input terminal used to receive a signal related to the sensor 239a. The terminal T2b_S1b is connected to the terminal T2u_S1a via a signal line in the control unit 23, and this signal line is connected to the CPU 231.

The terminal T2b_S2a is one input terminal for receiving signals related to the sensor 239b. The terminal T2b_S2a is connected to the CPU 231 via a signal line in the control unit 23.

The terminal T2b_S2b is the other input terminal used to receive a signal related to the sensor 239b. The terminal T2b_S2b is connected to the terminal T2u_S2a via a signal line in the control unit 23, and this signal line is connected to the CPU 231.

The downstream-side connection terminal portion T2b further includes terminals T2b_S3a, T2b_S3b, T2b_S4a, and T2b_S4b.

The terminal T2b_S3a is one input terminal used to receive a signal related to the sensor 239c. The terminal T2b_S3a is connected to the CPU 231 via a signal line in the control unit 23.

The terminal T2b_S3b is the other input terminal used to receive a signal related to the sensor 239c. The terminal T2b_S3b is connected to the terminal T2u_S3a via a signal line in the control unit 23, and this signal line is connected to the CPU 231.

The terminal T2b_S4a is one input terminal used to receive a signal related to the sensor 239d. The terminal T2b_S4a is connected to the CPU 231 via a signal line in the control unit 23.

The terminal T2b_S4b is the other input terminal used to receive a signal related to the sensor 239d. The terminal T2b_S4b is connected to the terminal T2u_S4a via a signal line in the control unit 23, and this signal line is connected to the CPU 231.

Here, the signal lines connecting the terminals T2b_S4a and T2b_S4b to the CPU 231 are also connected to the terminal T2u_OPCOP, for example, via an OR circuit 238, together with the signal line connecting the terminal T2u_S4b to the CPU 231. As will be described later in detail, this configuration enables detection when the cassette 201 is pulled out and set in the open state in any of one or more optional devices 2 connected to the printing apparatus 1.

The downstream-side connection terminal portion T2b further includes a terminal T2b_SYN.

The terminal T2b_SYN is connected to a signal line that can transmit a reset signal for synchronization by the reset IC 236a. The terminal T2b_SYN is connected to the terminal T2u_SYN via a signal line in the control unit 23.

In this manner, the upstream-side connection terminal portion T2u can be selectively connected to the connection terminal portion T1b of the printing apparatus 1 and the downstream-side connection terminal portion T2b of another optional device 2. Similarly, the downstream-side connection terminal portion T2b can be connected to the upstream-side connection terminal portion T2u of another optional device 2. According to this configuration, it is possible to appropriately implement the multi-stage connection of the optional devices 2 to the printing apparatus 1.

In the optional device 2, the motors 212 and 223 and the sensors 239a to 239d contribute to appropriate implementation of the paper feed function of the optional device 2, thereby assisting the function of the printing apparatus 1. Therefore, these may collectively be expressed as an auxiliary function unit 29. That is, it can be said that the control unit 23 assists the function of the printing apparatus 1 by performing driving control of the auxiliary function unit 29. Additionally, the motor driver 234 that drives the motors 212 and 223 may be included in a part of the auxiliary function unit 29, and the nonvolatile memory 233b may be included in another part of the auxiliary function unit 29. In this case, it can be said that the CPU 231 assists the function of the printing apparatus 1 by performing driving control of the auxiliary function unit 29.

### <One-Stage Connection>

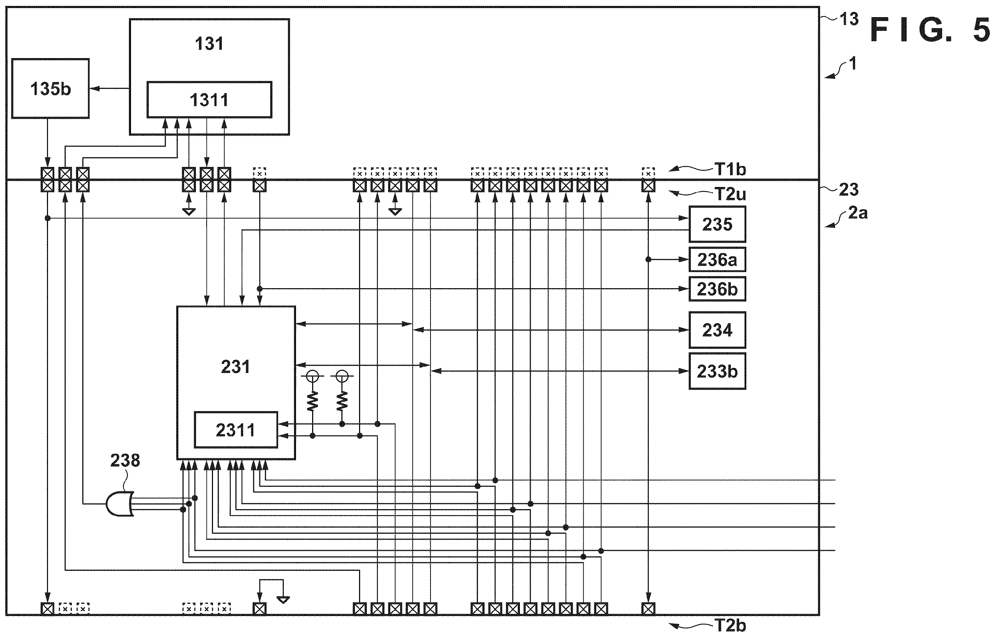

Fig. 5 is a block diagram showing an example of a case where one stage of the optional device 2 is connected (for clarity, elements unrelated to the following explanation are not shown). When the single optional device 2a is connected below the printing apparatus 1, the connection terminal portion T1b of the printing apparatus 1 and the upstream-side connection terminal portion T2u of the optional device 2a are connected as shown in Fig. 5.

That is, the connection relationship between the terminal portions T1b and T2u is as follows (see Figs. 3 and 4):

| (connection terminal portion T1b) | (upstream-side connection terminal portion T2u) |
|---|---|
| terminal T1b_PW - | terminal T2u_PW |
| terminal T1b_OPC4 - | terminal T2u_OPC4 |
| terminal T1b_OPCOP - | terminal T2u_OPCOP |
| terminal T1b_OPC1 - | terminal T2u_OPC1 |
| terminal T1b_COMo - | terminal T2u_COMi |
| terminal T1b_COMi - | terminal T2u_COMo |

Note that, as can be seen from Fig. 5, the remaining terminals T2u_RST, T2u_OPCa, T2u_OPCb, T2u_OPCex, T2u_D1, T2u_D2, T2u_S1a, T2u_S1b, T2u_S2a, T2u_S2b, T2u_S3a, T2u_S3b, T2u_S4a, T2u_S4b, and T2u_SYN in the upstream-side connection terminal portion T2u are set in the unconnected state.

All terminals in the downstream-side connection terminal portion T2b of the optional device 2a are set in the unconnected state.

In the printing apparatus 1, the CPU 131 detects, by the detection unit 1311 via the terminal T1b_OPC1, that the optional device 2a is connected to the printing apparatus 1. In accordance with this detection, the CPU 131 can communicate with the CPU 231 of the optional device 2a via the terminals T1b_COMo and T1b_COMi.

In the optional device 2a, the CPU 231 performs driving control of each element in the optional device 2a based on the communication result with the CPU 131 of the printing apparatus 1. Thus, the paper feed function of the optional device 2a can be implemented.

When one stage of the optional device 2 is connected, the terminals T2b_OPCa and T2b_OPCb in the downstream-side connection terminal portion T2b of the optional device 2a remain in the unconnected state. Accordingly, the two signal lines connected to the terminals T2b_OPCa and T2b_OPCb remain pulled up to H level by the pull-up resistors. According to this, the detection unit 2311 can detect that one stage of the optional device 2 is connected.

### <Two-Stage Connection>

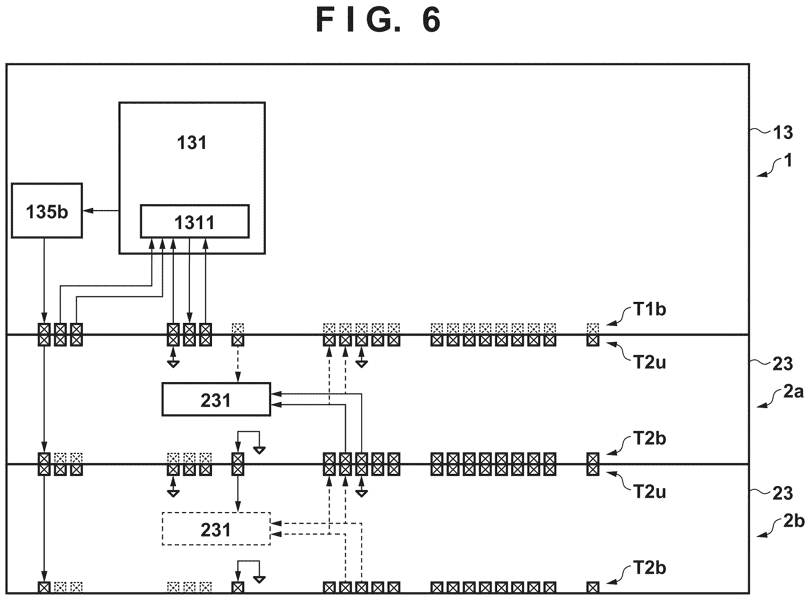

Fig. 6 is a block diagram showing an example of a case where two stages of the optional devices 2 are connected. When the optional device 2b is further connected to the one-stage configuration (the configuration shown in Fig. 5), the downstream-side connection terminal portion T2b of the optional device 2a and the upstream-side connection terminal portion T2u of the optional device 2b are connected as shown in Fig. 6.

That is, the connection relationship between the terminal portions T2b and T2u is as follows (see Fig. 4):

| (downstream-side connection terminal portion T2b) | (upstream-side connection terminal portion T2u) |
|---|---|
| terminal T2b_PW - | - terminal T2u_PW |
| terminal T2b_RST - | terminal T2u_RST |
| terminal T2b_OPC4 - | terminal T2u_OPCa |
| terminal T2b_OPCa - | terminal T2u_OPCb |
| terminal T2b_OPCb - | terminal T2u_OPCex |
| terminal T2b_D1 - | terminal T2u_D1 |
| terminal T2b_D2 - | terminal T2u_D2 |
| terminal T2b_S1a - | terminal T2u_S1a |
| terminal T2b_S1b - | terminal T2u_S1b |
| terminal T2b_S2a - | terminal T2u_S2a |
| terminal T2b_S2b - | terminal T2u_S2b |
| terminal T2b_S3a - | terminal T2u_S3a |
| terminal T2b_S3b - | terminal T2u_S3b |
| terminal T2b_S4a - | terminal T2u_S4a |
| terminal T2b_S4b - | terminal T2u_S4b |
| terminal T2b_SYN - | terminal T2u_SYN |

Note that, as can be seen from Fig. 6, the remaining terminals T2u_OPC4, T2u_OPCOP, T2u_OPC1, T2u_COMi, and T2u_COMo in the upstream-side connection terminal portion T2u of the optional device 2b are set in the unconnected state.

All terminals in the downstream-side connection terminal portion T2b of the optional device 2b are set in the unconnected state.

The terminal T2u_RST in the upstream-side connection terminal portion T2u of the optional device 2b is grounded via the terminal T2b_RST in the downstream-side connection terminal portion T2b of the optional device 2a. Accordingly, the CPU 231 of the optional device 2b is continuously reset to maintain the inactive state, thereby being inactivated (in Fig. 6, a dashed-line box indicates the inactive state). That is, the terminal T2b_RST is used to inactivate the CPU 231 of another optional device 2 (the optional device 2b here) connected to the downstream side, and need only be fixed at a predetermined signal level in the optional device 2 (optional device 2a). In this embodiment, the grounded terminal T2b_RST is typically connected to a ground node, but the logic level may be inverted.

In this manner, the CPU 231 of the optional device 2a can perform driving control of each element in the optional devices 2a and 2b, thereby selectively implementing the paper feed functions of the optional devices 2a and 2b.

Here, when two stages of the optional devices 2 are connected, the terminal T2b_OPCa in the downstream-side connection terminal portion T2b of the optional device 2a is connected to the terminal T2u_OPCb in the upstream-side connection terminal portion T2u of the optional device 2b. Since the terminal T2u_OPCb is in the open state, the signal line connected to the terminal T2b_OPCa remains pulled up to H level by the pull-up resistor.

To the contrary, the terminal T2b_OPCb in the downstream-side connection terminal portion T2b of the optional device 2a is grounded via the terminal T2u_OPCex in the upstream-side connection terminal portion T2u of the optional device 2b. Accordingly, the signal line connected to the terminal T2b_OPCb is set at L level.

Therefore, the detection unit 2311 in the optional device 2a can detect that two stages of the optional devices 2 are connected.

### <Three-Stage Connection>

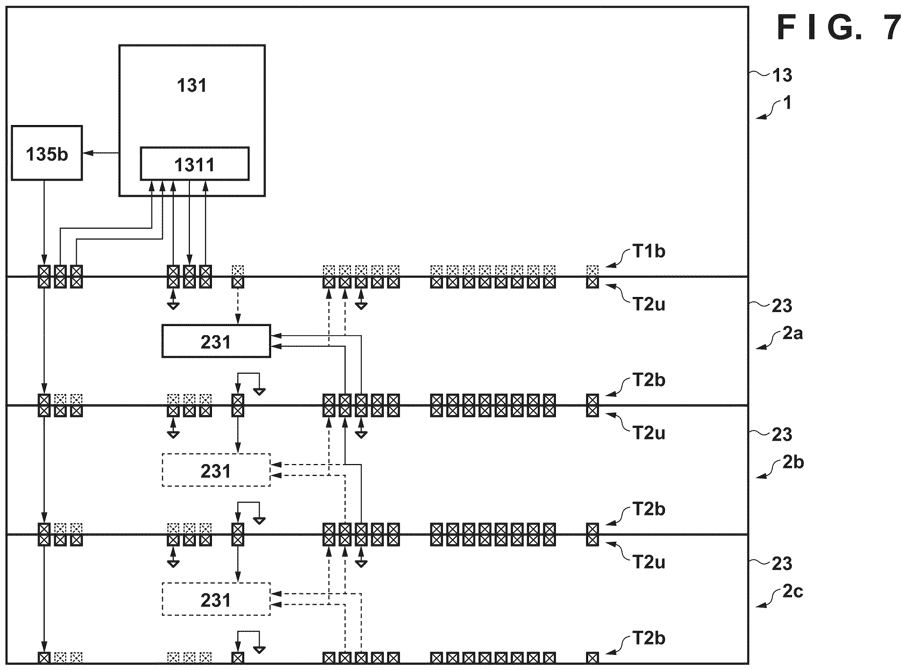

Fig. 7 is a block diagram showing an example of a case where three stages of the optional devices 2 are connected. In this case, the optional device 2c may further be connected to the two-stage configuration (the configuration shown in Fig. 6) by a procedure similar to that in the two-stage connection.

As described above, the CPU 231 of the optional device 2b is inactivated. This also applies to the CPU 231 of the optional device 2c. That is, the terminal T2u_RST in the upstream-side connection terminal portion T2u of the optional device 2c is grounded via the terminal T2b_RST in the downstream-side connection terminal portion T2b of the optional device 2b. Accordingly, the CPU 231 of the optional device 2c is continuously reset to maintain the inactive state, thereby being inactivated.

In this manner, the CPU 231 of the optional device 2a can perform driving control of each element in the optional devices 2a, 2b, and 2c, thereby selectively implementing the paper feed functions of the optional devices 2a, 2b, and 2c.

Here, when three stages of the optional devices 2 are connected, in the optional device 2a, the two signal lines connected to the terminals T2b_OPCa and T2b_OPCb in the downstream-side connection terminal portion T2b are both set at L level. Therefore, the detection unit 2311 in the optional device 2a can detect that three stages of the optional devices 2 are connected.

### <Connection in Four or More Stages>

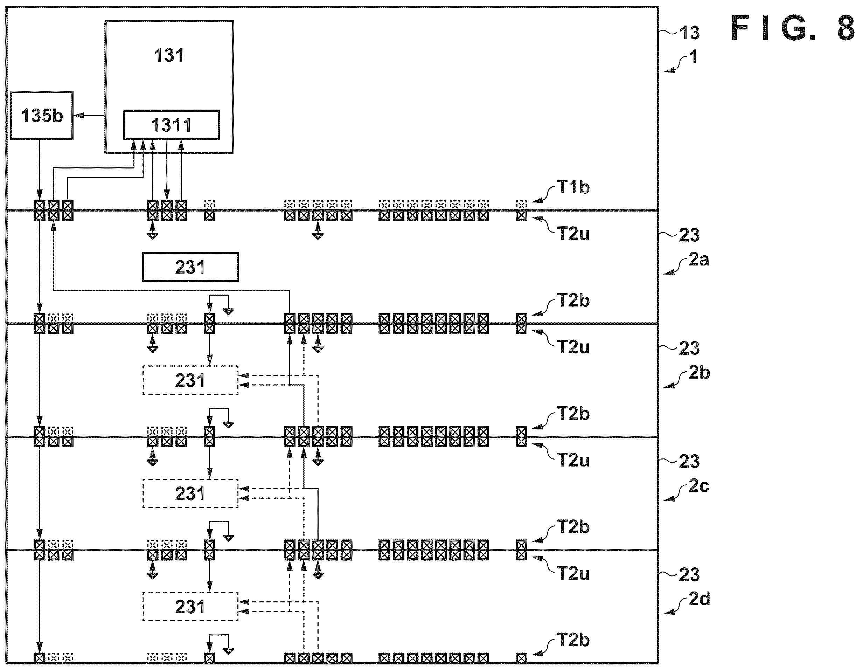

Fig. 8 is a block diagram showing an example of a case where four stages of the optional devices 2 are connected. In this case, the optional device 2d may further be connected to the three-stage configuration (the configuration shown in Fig. 7) by the procedure similar to that in the two-stage or three-stage connection.

In the four-stage connection, the grounded terminal T2u_OPCex in the upstream-side connection terminal portion T2u of the optional device 2d is connected to the terminal T1b_OPC4 in the connection terminal portion T1b of the printing apparatus 1 by sequentially passing through the optional devices 2c, 2b, and 2a. According to this, the CPU 131 of the printing apparatus 1 can detect by the detection unit 1311 that the number of stages of the optional devices 2 connected to the printing apparatus 1 exceeds the allowable number of stages. This also applies to connection in five or more stages.

In this manner, when the optional devices 2 are connected to the printing apparatus 1 in four or more stages, the CPU 131 can, for example, display an error notification and, incidentally, temporarily stop the operation of the entire printing system SY. This can prevent, for example, collapse of the printing system SY and the like, thereby ensuring safety.

### <Summary of Multi-Stage Connection>

When multiple optional devices 2 are connected in multi-stage connection, the CPU 231 in the uppermost optional device 2a is activated, while the CPUs 231 in the other optional devices 2 on the downstream side are inactivated. The CPU 231 of the uppermost optional device 2a can detect, by the detection unit 2311, the number of stages (total number of connected stages) of the optional devices 2 connected to the printing apparatus 1 based on the signal levels of the two signal lines connected to the terminals T2b_OPCa and T2b_OPCb. Note that the relationships between the detection result of the detection unit 2311 and the total number of connected stages of the optional devices 2 are as follows:

### (detection result) (total number of connected stages)

H level, H level → 1
H level, L level → 2
L level, L level → 3

Based on the detected total number of connected stages, the CPU 231 of the optional device 2a can individually perform driving control of the optional devices 2.

In the other optional devices 2 (optional devices 2b, 2c,... here) on the downstream side, power is supplied from the printing apparatus 1, but the CPU 231 is maintained in the inactive state and therefore does not perform arithmetic processing. On the other hand, since power is supplied from the printing apparatus 1, the elements (for example, the motor driver 234, the nonvolatile memory 233b, and the like) other than the CPU 231 are in the operational state. These elements are driven or controlled by the CPU 231 of the uppermost optional device 2a.

Hence, the power consumption in the optional device 2 is lower when another optional device 2 is connected to the upstream side of the optional device 2 than when the printing apparatus 1 is connected thereto.

If the total number of connected stages exceeds the allowable number of stages (three here) (if the total number of connected stages is four or more), the CPU 131 of the printing apparatus 1 temporarily stops the operation of the entire printing system SY. Note that the allowable number of stages is intended to ensure safety as one purpose, and may be changed, for example, in accordance with the configuration of the optional device 2 without departing from the scope of this embodiment.

### <Signal Detection in Three-Stage Connection>

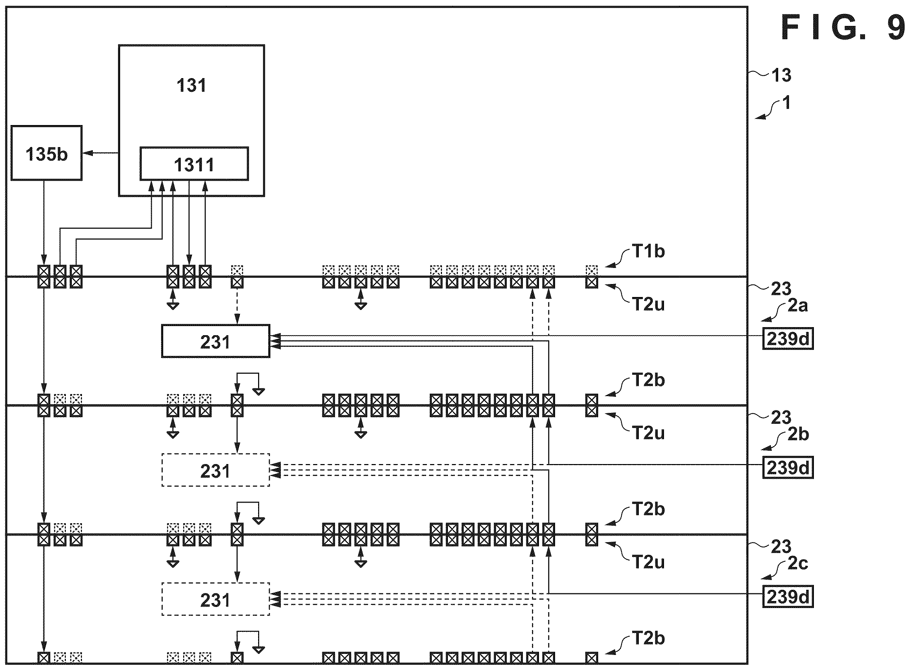

Fig. 9 is a block diagram showing an example of a case where three stages of optional devices 2 are connected. As described above, in three-stage connection, the CPU 231 of the uppermost optional device 2a is activated, while the CPUs 231 of the other optional devices 2b and 2c on the downstream side are inactivated.

As described above, since power is supplied from the printing apparatus 1 to the other optional devices 2b and 2c on the downstream side, the CPUs 231 are in the inactive state but the other elements are in the operable state.

For example, the motor driver 234 is connected to the uppermost optional device 2a via the terminals T2u_D1 and/or T2b_D1, so that the CPU 231 of the optional device 2a can control the motor driver 234 of any of the optional devices 2a to 2c.

The nonvolatile memory 233b is connected to the uppermost optional device 2a via the terminals T2u_D2 and/or T2b_D2, so that the CPU 231 of the optional device 2a can control the nonvolatile memory 233b of any of the optional devices 2a to 2c.

The CPU 231 of the uppermost optional device 2a can, for example, receive signals of the sensors 239a to 239d from any of the optional devices 2a to 2c.

As an example, related to the sensor 239d (the cassette sensor that can detect the opening/closing of the cassette 201), Fig. 9 shows the transmission path of a detection signal indicating that the cassette 201 is opened, which is indicated by solid arrows. Note that each dashed arrow indicates that the detection signal is not substantially transmitted because the CPU 231 is in the inactive state or the terminal is in the open state.

As described above, the signal lines connecting the terminals T2b_S4a and T2b_S4b to the CPU 231 can also be connected to the terminal T2u_OPCOP via the OR circuit 238, together with the signal line connecting the terminal T2u_S4b to the CPU 231 (see Fig. 4). According to this configuration, when the detection signal from the sensor 239d of any of the optional devices 2a to 2c is set at H level, the terminal T2u_OPCOP outputs H level. Hence, when the cassette 201 is pulled out and set in the open state in any of the optional devices 2, the CPU 131 of the printing apparatus 1 can detect this.

### <<Second Embodiment>>

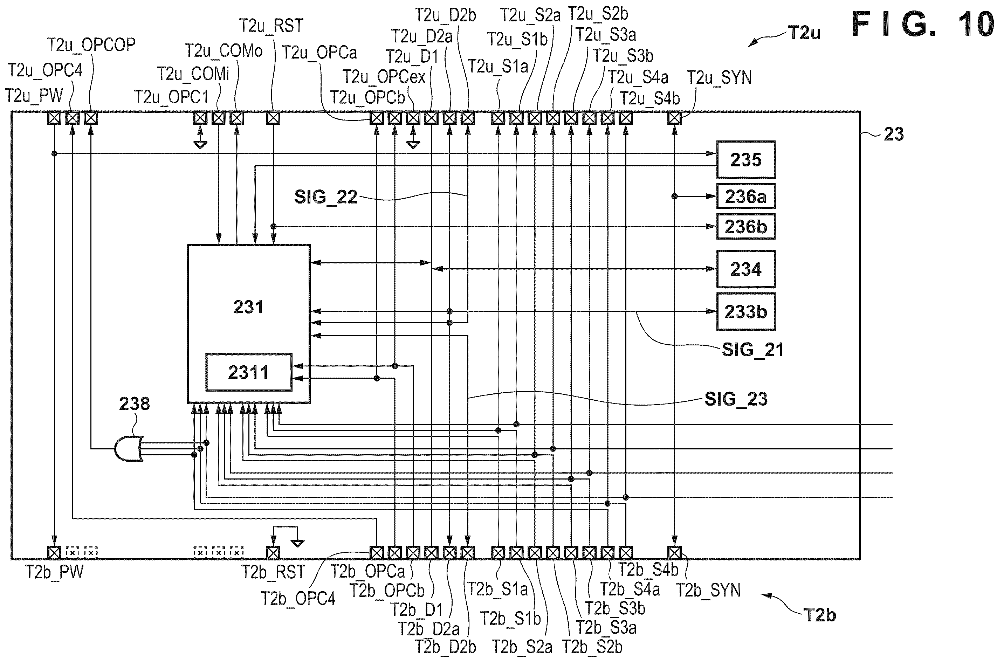

Fig. 10 is a block diagram showing an example of the system configuration of an optional device 2 according to the second embodiment. In this embodiment, terminals T2u_D2a and T2u_D2b are provided in place of a terminal T2u_D2 in an upstream-side connection terminal portion T2u, and terminals T2b_D2a and T2b_D2b are provided in place of a terminal T2b_D2 of a downstream-side connection terminal portion T2b.

The terminals T2u_D2a and T2u_D2b correspond to the terminals T2b_D2a and T2b_D2b, respectively. That is, in this embodiment as well, the upstream-side connection terminal portion T2u is configured to correspond to the downstream-side connection terminal portion T2b as well. This enables connection of the optional device 2 to another optional device 2 from below.

In this embodiment, the terminal T2u_D2a is connected to a signal line SIG_21 which is used by a CPU 231 to control a nonvolatile memory 233b. The terminals T2b_D2a and T2u_D2b are interconnected via a signal line SIG_22 in a control unit 23, and the signal line SIG_22 is connected to the CPU 231. The terminal T2b_D2b is connected to the CPU 231 via a signal line SIG_23.

That is, this embodiment is different from the first embodiment (see Fig. 4) in that the nonvolatile memory 223b of the optional device 2 can be connected to another optional device 2 via separate signal lines (rather than a so-called shared bus connection).

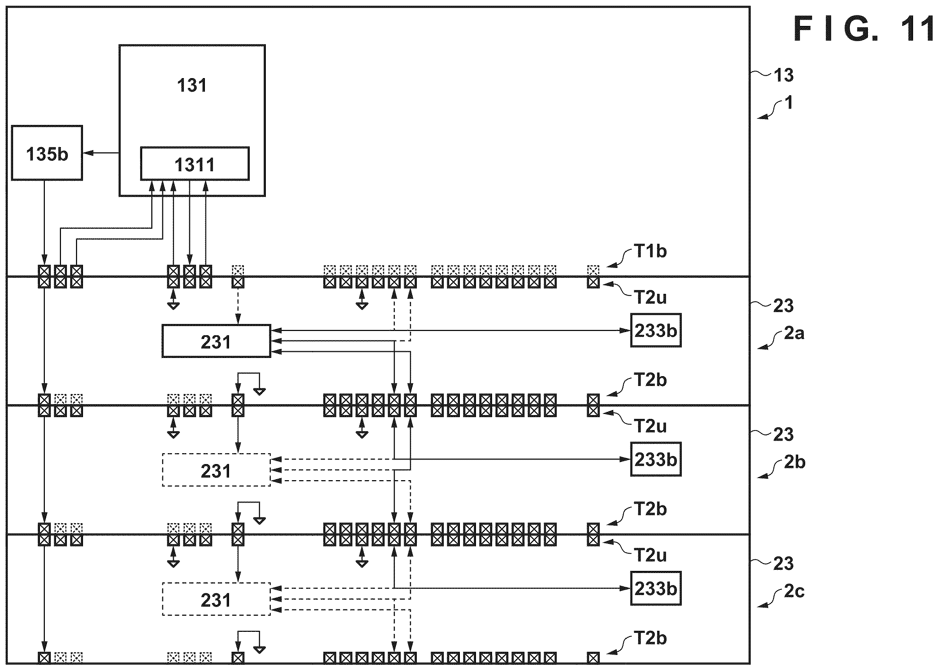

Fig. 11 is a block diagram showing three-stage connection according to this embodiment. According to this configuration, the CPU 231 of an uppermost optional device 2a can control the nonvolatile memory 233b of any of optional devices 2a to 2c, as in the first embodiment.

Furthermore, according to this embodiment, it is possible to suppress an increase in load capacitance associated with connecting multiple nonvolatile memories 233b to a common bus. For example, it is possible to suppress a distortion of signal waveform that can occur during reading/writing from/in the nonvolatile memory 233b. Therefore, according to this embodiment, the CPU 231 of the uppermost optional device 2a can appropriately access the nonvolatile memory 233b of any of the optional devices 2a to 2c. That is, this embodiment can also be said advantageous for more appropriate control of the nonvolatile memory 233b.

Fig. 11 shows the transmission path of the signal of the nonvolatile memory 223b in each of the optional devices 2a to 2c, which is indicated by solid arrows. Note that each dashed arrow indicates that the signal of the nonvolatile memory 223b is not substantially transmitted because the CPU 231 is in the inactive state or the terminal is in the open state.

Note that the terminals T2u_D2a, T2u_D2b, T2b_D2a, and T2b_D2b function as input/output terminals during reading/writing from/in the nonvolatile memory 233b. For example, during a read operation, the terminals T2u_D2a and T2u_D2b function as output terminals, and the terminals T2b_D2a and T2b_D2b function as input terminals. On the other hand, during a write operation, the terminals T2u_D2a and T2u_D2b function as input terminals, and the terminals T2b_D2a and T2b_D2b function as output terminals.

In this embodiment, the control of the nonvolatile memory 233b has been described. Additionally/incidentally, the contents of this embodiment may be applied to the control of a motor driver 234. For example, when driving motors 212 and 223 by PWM control, it is possible to drive them more appropriately.

### <<Others>>

Printing in this specification indicates forming an image by discharging ink onto a print medium, and the concept of an image includes a character, a number, a symbol, a graphic, and a photograph regardless of whether the image is visible. The ink is typically a liquid containing dye or pigment, but may be a colorless and transparent reaction liquid or may be expressed as a liquid including them. From this viewpoint, the printing apparatus 1 may be expressed as a liquid discharge apparatus. Similarly, the printhead 121 may be expressed as a liquid discharge head. The printing apparatus 1 may be a copying machine having a print function as a main function and further having, as sub-functions, a copy function, a scanner function, and a facsimile function.

In the embodiments, each element is named by an expression based on its main function, but the function described in the embodiments may be a sub function, and the expression is not strictly limited. Also, the expression can be replaced with another expression. For example, in the embodiments, the CPUs 131 and 231 serve as elements that perform arithmetic processing. However, the term "CPU" here refers to a processor or an arithmetic processing unit in broad sense that performs arithmetic processing to implement each function exemplified here, and its name may be changed in accordance with the application.

In the same vein, expressions such as "apparatus" and "unit" each appended to the end of an element are interchangeable. Alternatively, these may be omitted or added as appropriate.

Also, in regards to two or more elements exemplified in the embodiments, there is no strict limitation to the exemplification and the elements may be combined arbitrarily. For example, each of the two or more exemplified elements may be additionally selected or alternatively selected. As an example, when arbitrarily combining two elements A and B, an expression "A and/or B" or an expression "at least one of A and B" may be used to indicate only A, only B, or both A and B.

Various embodiments have been described in detail above but it will be understood that the present disclosure is not limited to these embodiments and encompasses all modifications, variants, alternatives and equivalents falling within the scope of the appended claims.

## Claims

1. An optional device (2) connectable to a printing apparatus (1) in multi-stage connection in one direction, comprising
an auxiliary function unit (29) configured to assist a function of the printing apparatus, and a control unit (23),
wherein, assuming that a side of the printing apparatus in the multi-stage connection of the device is an upstream side, and an opposite side is a downstream side,
the control unit includes
an arithmetic processing unit configured to perform arithmetic processing for controlling the auxiliary function unit based on power received from the printing apparatus, in a case where the printing apparatus is connected to the upstream side, and
a power transmission unit configured to transmit power received from the printing apparatus to another optional device connected to the downstream side, and
in a case where another optional device is connected to the upstream side, the arithmetic processing unit does not perform the arithmetic processing.

2. The device according to claim 1, wherein
the auxiliary function unit includes a memory.

3. The device according to claim 1, further comprising a motor,
wherein the auxiliary function unit includes a motor driver configured to drive the motor.

4. The device according to claim 1, further comprising an upstream-side connection terminal portion and a downstream-side connection terminal portion,
wherein
the upstream-side connection terminal portion is configured to be selectively connectable to a predetermined connection terminal portion in the printing apparatus and the downstream-side connection terminal portion in another optional device, and
the downstream-side connection terminal portion is configured to be connectable to the upstream-side connection terminal portion in another optional device.

5. The device according to claim 4, wherein
the upstream-side connection terminal portion includes a power input terminal used to input power from the printing apparatus,
the downstream-side connection terminal portion includes a power output terminal, which is used to output power input to the power input terminal to another optional device connected to the downstream side, and is connected to the power input terminal in the control unit, and
the control unit further includes a power generation unit configured to generate, based on power input to the power input terminal, power for driving the auxiliary function unit.

6. The device according to claim 4, wherein
the upstream-side connection terminal portion includes a first output terminal and a second output terminal used to output signals to another optional device connected to the upstream-side connection terminal portion,
the downstream-side connection terminal portion includes a first input terminal and a second input terminal, which are used to receive signals from another optional device connected to the downstream-side connection terminal portion, and correspond to the first output terminal and the second output terminal, respectively, in another optional device connected to the upstream-side connection terminal portion, and
the control unit further includes
a first signal line used to control the auxiliary function unit by the arithmetic processing unit and connected to the first output terminal,
a second signal line connected to the arithmetic processing unit, and connected to the first input terminal and the second output terminal, and
a third signal line connected to the arithmetic processing unit, and connected to the second input terminal.

7. The device according to claim 1, wherein
the control unit further includes an inactivation unit configured to maintain, in an inactive state, the arithmetic processing unit in another optional device connected to the downstream side.

8. The device according to claim 7, wherein
the control unit further includes a detection unit configured to detect that another optional device is connected to the downstream side, and
the arithmetic processing unit performs further arithmetic processing for controlling the auxiliary function unit in the other optional device detected by the detection unit.

9. The device according to claim 8, wherein
the detection unit is configured to be capable of detecting other optional devices connected to the downstream side up to a predetermined number of stages, and
the control unit further includes a notification unit configured to notify the printing apparatus that the number of stages of other optional devices connected to the downstream side exceeds the predetermined number of stages.

10. The device according to claim 9, wherein
based on a response from the printing apparatus associated with a notification by the notification unit, the control unit suppresses the arithmetic processing.

11. The device according to claim 1, wherein
the auxiliary function unit has a function of supplying a print medium to the printing apparatus.

12. A printing system comprising:
a printing apparatus; and
not less than one optional device defined in any one of claims 1 to 11, and connected to the printing apparatus.

13. An optional device (2) connectable to a printing apparatus (1) in multi-stage connection in one direction, comprising
an auxiliary function unit (29) configured to assist a function of the printing apparatus, and a control unit (23),
wherein, assuming that a side of the printing apparatus in the multi-stage connection of the device is an upstream side, and an opposite side is a downstream side,
the control unit includes
an arithmetic processing unit configured to perform arithmetic processing for controlling the auxiliary function unit based on power received from the printing apparatus, in a case where the printing apparatus is connected to the upstream side,
a power transmission unit configured to transmit power received from the printing apparatus to another optional device connected to the downstream side, and
an inactivation unit configured to maintain, in an inactive state, the arithmetic processing unit in another optional device connected to the downstream side.

14. The device according to claim 13, wherein
the control unit further includes a detection unit configured to detect that another optional device is connected to the downstream side, and
the arithmetic processing unit performs further arithmetic processing for controlling the auxiliary function unit in the other optional device detected by the detection unit.

15. The device according to claim 14, wherein
the detection unit is configured to be capable of detecting other optional devices connected to the downstream side up to a predetermined number of stages, and
the control unit further includes a notification unit configured to notify the printing apparatus that the number of stages of other optional devices connected to the downstream side exceeds the predetermined number of stages.

16. The device according to claim 13, further comprising an upstream-side connection terminal portion and a downstream-side connection terminal portion,
wherein
the upstream-side connection terminal portion is configured to be selectively connectable to a predetermined connection terminal portion in the printing apparatus and the downstream-side connection terminal portion in another optional device, and
the downstream-side connection terminal portion is configured to be connectable to the upstream-side connection terminal portion in another optional device.

17. The device according to claim 16, wherein
the upstream-side connection terminal portion includes a power input terminal used to input power from the printing apparatus,
the downstream-side connection terminal portion includes a power output terminal, which is used to output power input to the power input terminal to another optional device connected to the downstream side, and is connected to the power input terminal in the control unit, and
the control unit further includes a power generation unit configured to generate, based on power input to the power input terminal, power for driving the auxiliary function unit.

18. The device according to claim 16, wherein
the inactivation unit is a node fixed at a predetermined signal level, and
the downstream-side connection terminal portion includes a signal output terminal connected to the node and used to output a signal at the fixed signal level to another optional device connected to the downstream side.

19. The device according to claim 18, wherein
in a case where another optional device is connected in the upstream-side connection terminal portion, the arithmetic processing unit receives a signal at the fixed signal level via the signal output terminal in the other optional device, thereby being maintained in an inactive state.

20. The device according to claim 13, wherein
the auxiliary function unit includes at least one of a motor and a sensor.

21. The device according to claim 13, wherein
the auxiliary function unit has a function of supplying a print medium to the printing apparatus.

22. A printing system comprising:
a printing apparatus; and
not less than one optional device defined in any one of claims 13 to 21, and connected to the printing apparatus.

23. An optional device (2) connectable to a printing apparatus (1) in multi-stage connection in one direction, comprising
an auxiliary function unit (29) configured to assist a function of the printing apparatus, and a control unit (23),
wherein, assuming that a side of the device on a side of the printing apparatus in the multi-stage connection is an upstream side, and an opposite side is a downstream side,
power consumption in the device is lower when another optional device is connected to the upstream side of the device than when the printing apparatus is connected the upstream side of the device.
